# EUROPEAN PATENT SPECIFICATION

(11) **EP 2 833 734 B1**
(45) Date of publication and mention of the grant of the patent: **25.05.2016**
(21) Application number: 13709094.0
(22) Date of filing: 12.03.2013
(51) Int. Cl.: A23G 9/22, A23G 9/50, A21C 15/02, A23L 7/117

(54) **APPARATUS AND PROCESS FOR THE MANUFACTURE OF A COMPOSITE FROZEN PRODUCT**
VERFAHREN UND VORRICHTUNG ZUR HERSTELLUNG EINES GEFRORENEN VERBUNDPRODUKTS
APPAREIL ET PROCÉDÉ POUR LA FABRICATION D'UN PRODUIT CONGELÉ COMPOSITE

(30) Priority: 03.04.2012 EP 12162959
(43) Date of publication of application: 11.02.2015
(73) Proprietor: Unilever PLC, London, Greater London EC4P 0DY (GB); Unilever N.V., 3013 AL Rotterdam (NL)
(72) Inventor: BARTKOWSKA, Beata, Bedford Bedfordshire MK44 1LQ (GB); BURGESS, Geoffrey, Alec, Bedford Bedfordshire MK44 1LQ (GB); DOEHREN, Paul, Michael, Bedford Bedfordshire MK44 1LQ (GB); HALL, Richard, Andrew, Wellingborough Northamptonshire NN8 4EL (GB); LUCK, Richard, Henry, Bedford Bedfordshire MK44 1LQ (GB)
(74) Representative: Warner, Guy Jonathan
(86) International application number: PCT/EP2013/055034
(87) International publication number: WO 2013/149794

(56) References cited:
- EP-A1- 1 302 112
- EP-A1- 1 719 413
- EP-A1- 1 808 080
- US-A1- 2003 056 662
- US-A1- 2011 151 065

## Description

### FIELD OF THE INVENTION

The present invention relates to an apparatus and process for the manufacture of a composite frozen product, wherein the product comprises a frozen confection enclosed within a casing.

### BACKGROUND OF THE INVENTION

Frozen confections are well liked by consumers and are often provided in cartons such as pint pots. Other food items such as pies, which have a filling encased within a crust, are also popular with consumers. Furthermore, consumers are increasingly attracted the non-baked crusts as exemplified by the bases of products such as cheesecakes. It is therefore highly desirable to be able to combine these elements together to provide a composite frozen product in which a frozen confection is encased with material such as that used in non-baked cheesecake-type bases. Examples of such materials include particles of biscuits, particles of cookies, particles of cakes, and so on.

However, it is extremely difficult to make crusts or casings from these materials because the particles are unstable and cannot be readily formed into a casing into which the frozen confection may then be introduced to form the composite frozen product. There is therefore a need for an apparatus and process that overcomes these disadvantages and that can be used to make such a composite frozen product.

### SUMMARY OF THE INVENTION

We have now found that it is possible to create casings from material such as particles of biscuits, particles of cookies, particles of cakes, and the like, provided that a particular apparatus and/or process is employed.

Accordingly in a first aspect the invention provides an apparatus for the production of a composite frozen product in a container, the product being comprised of a frozen confection within an edible casing, wherein the apparatus comprises:
- a forming element having an external surface corresponding to the internal shape of the container, the forming element being further characterised by a passage running through the forming element from an upper opening to a lower opening
the apparatus further comprising
- means for removing material from the passage of the forming element.

Preferably the container is a tub.

Preferably the container is a sleeve for a cone, preferably a pointed tipped cone, more preferably a round bottomed cone.

Preferably the means for removing material comprise a suction device. In an alternative embodiment the means for removing material comprise a screw extruder.

In a second aspect, the invention provides a process for the production of a composite frozen product in a container, the product being comprised of a frozen confection within an edible casing, the process comprising the steps of:
a) at least partially filling the container with particles of a casing material having an average diameter of at most 3mm,
b) inserting a forming element into the container, the forming element having an external surface corresponding to the internal shape of the container, and being further characterised by a passage running through the forming element from an upper opening to a lower opening
c) removing excess casing material from the passage of the forming element
d) removing the forming element and then
e) at least partially filling the container with a frozen confection.

Preferably the container is a tub.

Preferably the container is a sleeve for a cone, preferably a pointed tipped cone, more preferably a round bottomed cone.

Preferably the edible casing comprises at least 50wt%, preferably at least 70wt%, more preferably at least 85 wt%, more preferably still at least 90wt%, yet more preferably still 95wt%, most preferably 97.5wt% of particles of casing material. Preferably the particles of casing material have an average diameter of from 0.001 to 2.5 mm, preferably from 0.01 to 2 mm, more preferably from 0.05 to 1.5 mm, more preferably still from 0.1 to 1 mm

In a third aspect the product obtained or obtainable by the process of the second aspect is disclosed.

These and other aspects, features and advantages will become apparent to those of ordinary skill in the art from a reading of the following detailed description and the appended claims. For the avoidance of doubt, any feature of one aspect of the present invention may be utilised in any other aspect of the invention. The word "comprising" is intended to mean "including" but not necessarily "consisting of" or "composed of." In other words, the listed steps or options need not be exhaustive. It is noted that the examples given in the description below are intended to clarify the invention and are not intended to limit the invention to those examples per se. Similarly, all percentages are weight/weight percentages unless otherwise indicated.

### DRAWINGS

Figure 1 shows a typical ice cream container.
Figure 2 shows a typical ice cream container with a forming element according to the apparatus of the invention and a representation of the forming element in cross section.
Figure 3 shows the container filled with casing material.
Figure 4 shows a forming element indexed with and inserted into the container filled with casing material.
Figure 5 shows a schematic representation of a removal means removing excess casing material from the container.
Figure 6 shows the introduction of a tamping element into the container.
Figure 7 shows the tamping element in operation.
Figure 8 shows the formed casing within the container.
Figure 9 shows the introduction of a frozen confection into the container.
Figure 10 shows the casing being topped with further casing material and a tamping element for compacting the topping.

### DETAILED DESCRIPTION OF THE INVENTION

Frozen confection means a confection made by freezing a pasteurised mix of ingredients such as water, fat, sweetener, protein (normally milk proteins), and optionally other ingredients such as emulsifiers, stabilisers, colours and flavours. Frozen confections may be aerated. Frozen confections include ice cream, milk ice, water ice, frozen yoghurt and the like. They typically have an overrun of from 20 and 150%, preferably from 40 to 120%. The frozen confection may be ice cream, sherbet, sorbet, water ice or frozen yoghurt.

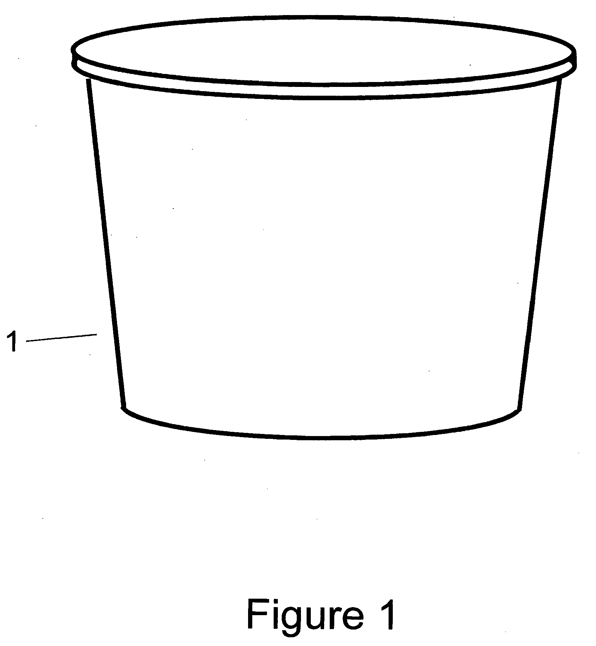

Typically, frozen confections are provided in containers such as tubs and pint pots. Such a container is shown in figure 1. The containers encompassed by this invention also include cone sleeves which can be sleeves for both standard cones having a pointed tip and cone having a rounded tip. In all cases, the containers will have a base (i.e. a lower end), walls, and an opening. As will be appreciated, the base of the such containers is narrower than the opening.
As described above, it is desired to provide a product to the consumer that is characterised by a new and interesting casing material that will provide a new and improved product to the consumer. The casing material needs to be formed into a casing that will at least have a base and wall that correspond to the base and wall of the container that the product is formed, manufactured and distributed in. The casing may optionally have a top as described below. Into this casing will be dosed a frozen confection - i.e. the casing material will encase the frozen confection as described above. By encase, it is meant that frozen confection will be at least partially contained by the casing. The combination of the frozen confection within casing is referred to herein as the composite frozen product. These composite frozen products provide a unique product format that benefits from the desired organoleptic properties provided by the casing material used.

The casing material can be made from particles of, for example, a dry baked material. Dry baked material refers to a food product which is produced by baking a mix (dough) comprising flour and water, and optionally other ingredients such as sugars and fats / oils. Dry baked materials are typified by biscuits and have a moisture content of less than 5 wt%, e.g. about 2 wt% and a close-knit structure with little aeration. Water content can be measured using standard techniques such as drying a known volume and weight of a product in a drying oven and comparing the weight and volume before and after drying. A typical pre-mix for a dry baked material comprises 20-55%, preferably 25-40% flour, 5-50%, preferably 10 to 30% sugar, 1-20%, preferably 1-10% fat, 0-10%, preferably 2-7% egg and / or milk solids and 5-30%, preferably 10-30% water. Fats / oils that may be used include coconut oil, palm oil, palm kernel oil, cocoa butter, milk fat, sunflower oil, safflower oil, olive oil, linseed oil, soybean oil, rapeseed oil, and mixtures, fractions or hydrogenates thereof. Sugars that may be used include simple sugars such as sucrose, fructose, lactose, and dextrose; corn / glucose syrups and invert sugar. In addition, the dry baked material may contain other ingredients conventionally found in such products, such as starch, salt, flavours, colours (e.g. caramel), cocoa powder, inulin, emulsifiers (e.g. lecithin), stabilisers, preservatives and inclusions such as pieces of nuts, fruit and chocolate. Water is an important component of the mix because it allows the starch to gelatinize during baking and allows the mix to be blended but much, if not substantially all of the water is driven off during baking, so that the water content of the resulting dry baked material is at most 5wt%. Hence the amounts of the other ingredients in the final dry baked products can be proportionately higher. Due to its formulation, structure and water content, dry baked material is frangible and prone to breakage and crumbling. Thus hard biscuits and cookies are suitable since they are normally baked for long enough such that they become crisp and dry and have a water content at most 5wt%. In addition, particles of cakes, sponges, brownies, soft cookies and the like which are baked to be soft and moist in the centre also suitable for this invention.

The size of the particles of the casing material plays an important role. Particles that are too large are not suitable for use in the process of the invention. The particles of casing material therefore have an average diameter of at most 3mm. Preferably the particles of casing material have an average diameter of from 0.001 to 2.5 mm, preferably from 0.01 to 2 mm, more preferably from 0.05 to 1.5 mm, more preferably still from 0.1 to 1 mm. The particles may have heterogeneous shapes, sizes, volumes, surface areas and so on. Particles may be circular, non-circular or a mixture thereof. In some preferred embodiments, the particles are substantially spherical. As used herein, the term diameter refers to the maximum length of the particles in any dimension. For particles having an irregular shape, the diameter is the length of the longest cross section that can be cut through the body of the particle. When the diameter of particles is referred to it is meant that at least 90% by number of the particles have that diameter. The particles of the casing material may be obtained from larger pieces of casing material, for example by crushing or breaking.

The edible casing may contain at least 50wt%, preferably at least 70wt%, more preferably at least 85 wt%, more preferably still at least 90wt%, yet more preferably still 95wt%, most preferably 97.5wt% of particles of casing material. In a most preferred embodiment the edible casing is almost entirely formed from the particles of casing material.

In addition, the edible casing can also contain up to about 25% of a mixture of other particulate edible pieces such as seeds, cereals, fruit pieces, chocolate chips and the like. These have an average diameter from 1 to 3 mm, preferably from 1.5 to 2.0 mm.

As used herein, the term "binder" means a substance which can be used to stick pieces of casing material together. Binders are typically based on fats or viscous sugar solutions. Suitable fats include butter, coconut oil, palm oil, canola oil, soya bean oil, sunflower oil and olive oil. The edible casing may contain less than 15 wt% binder by weight of the casing, preferably less than 10 wt% of binder, more preferably less than 5 wt%, more preferably still less than 0.5 wt%, more preferably still at most 0.05 wt% binder. A certain amount of binder may be necessary to allow the edible casing to be formed such that it has the desired product characteristics and stability. Accordingly the edible casing may contain at least 0.01 wt% binder by weight, preferably at least 0.02 wt%. The casing material often inherently contains ingredients such as fats or sugars. However, these ingredients have been subjected to baking conditions and are integral to the structure of the dry baked material itself. As such, these ingredients are not available to function as binders in the sense of this invention and the level of additional binder is understood to not include any other similar material that is already present in the dry baked material.

In this particulate form, the casing material forms a mass that is relatively free flowing and is unable to retain a structure due to the movement and instability of the particles. Furthermore, these particles are not particularly malleable and cannot easily be shaped to form a casing. Although it may be relatively easy to form a base from the particles of the casing material, for examples as is done with cheesecake-type bases, it is very difficult to form them into more vertical structures such as the walls of the casing which is essential for the desired composite frozen product. However, the present invention has now found that if a particular apparatus is used then it is possible to make casings from this material.

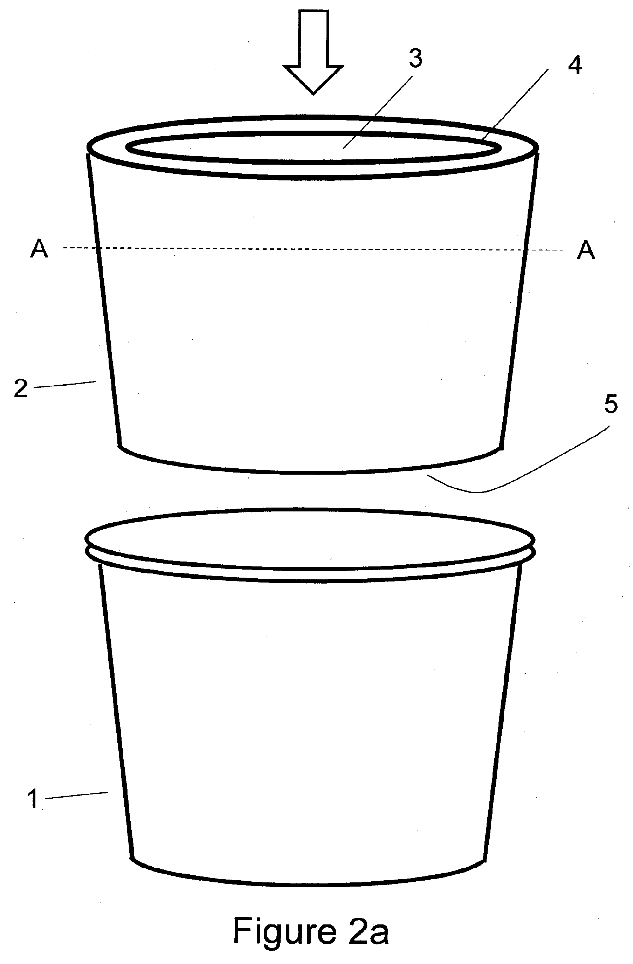

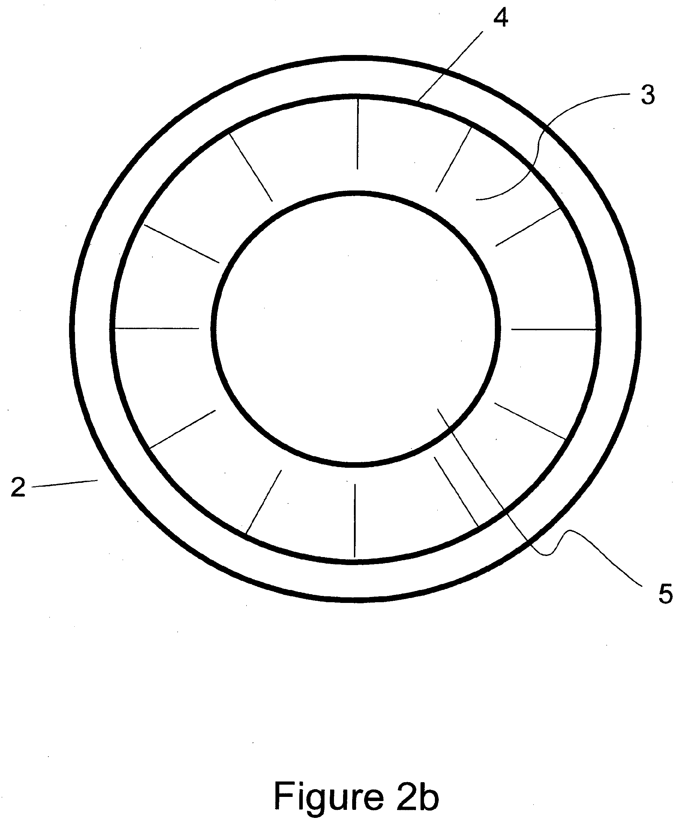

The apparatus includes a forming element 2 such as that shown in Fig 2. The external surface of the forming element 2 corresponds to the internal shape of the container 1 in which the composite frozen product will be made- i.e. the walls of the forming element 2 have the same shape and angle as the walls of the container 1. Importantly, the forming element 2 has a passage 3 running through the forming element from an upper opening 4 to a lower opening 5. Figure 2b shows the same forming element in cross section along line A-A as viewed from above in the direction of the arrow shown in Figure 2a. Preferably the forming element is made from a metal such as stainless steel. The forming element may also be coated to prevent the forming element from adhering to the casing material. The forming element is preferably coated with an adhesion reducing material, such as Teflon. The forming element may also be provided with outlets across the surface that allow gas to be forced out of the surface of the forming element hence facilitating removal of the forming element from the casing.

Preferably the rim surrounding the lower opening 5 of the forming element 2 is shaped to form a point such that in operation the shape of the rim directs crust material outwards towards the wall of the container as the forming element moves through the casing material as discussed below. For example, the inner surface of the lower opening may terminate lower than the outer surface to form a bevelled or chamfered edge. Alternatively, the rim or the lower opening tapers thereby to form a pointed rim around the opening.

The apparatus also includes means for removing excess coating material. This means can for example be a suction device or a screw extruder. The means for removing excess coating material are structured such that they can be introduced into passage 3 of the forming element 2. In one embodiment the means for removing excess coating material are separate from the forming element. In another embodiment the means for removing excess coating material may be integrated with the forming element.

The apparatus further includes filling means for adding frozen confection into the casing once made.

The apparatus may also optionally include a tamping element for tamping the base of the edible casing.

In a preferred embodiment the apparatus also includes a holder for the container. The holder corresponds to the shape of the container and serves to support the container during the formation of the edible casing and the production of the composite frozen product. A further advantage of such a support is that it also serves to provide a surface against which the pressure created by the forming element can be reciprocated which facilitates the formation of the edible casing.

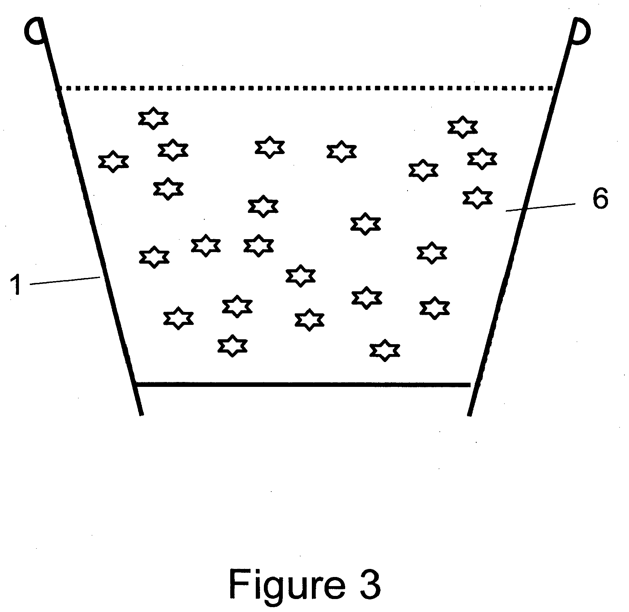

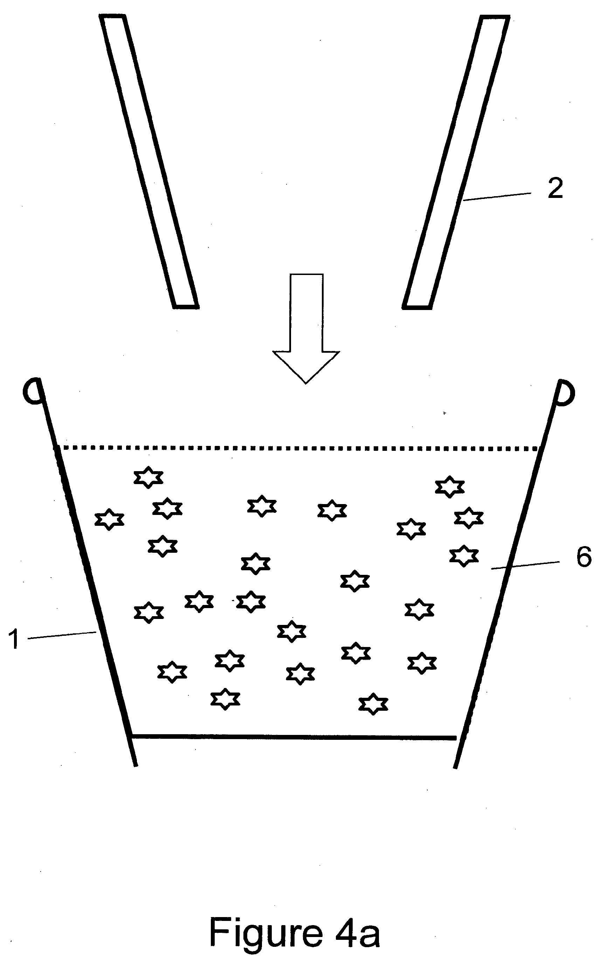

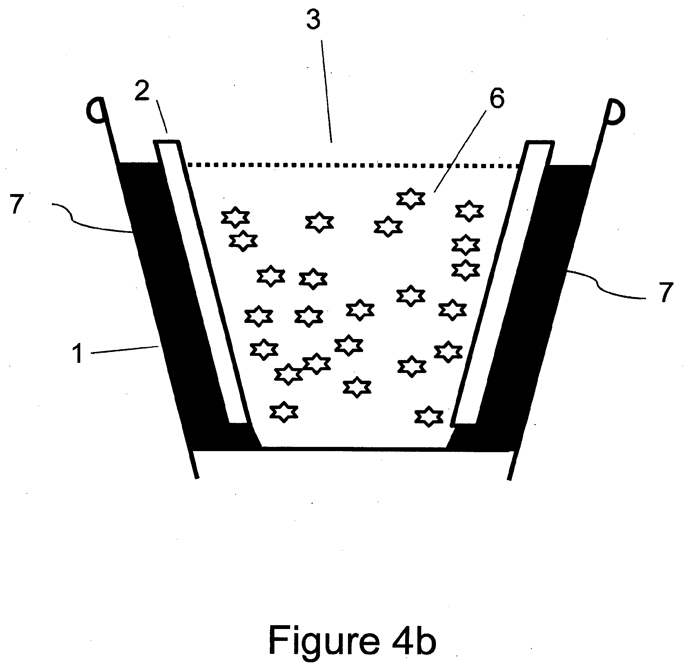

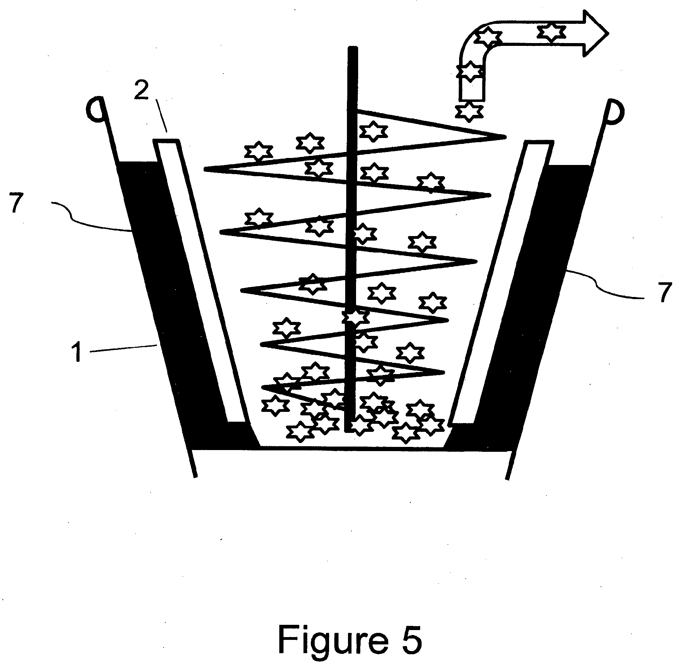

The apparatus of the invention is used as follows. As shown in figure 3, a container 1, such as those described above is filled with casing material 6. The fill level will approximately correspond to the final height of the casing formed. The forming element 2 is then indexed with the container 1 (figure 4a) and inserted into the casing material 6 within the container 1 (figure 4b). Due to the shape of the forming element relative 2 to the container 1, the movement of the forming element 2 through the casing material 6 acts to compress the casing material 6 between the outer surface of the forming element 2 and the internal surface of the container 1. This pressure on the casing material 6 causes it to compact and form a more stable structure 7 than was previously possible by simply adding the casing material into the container. This stable structure will then form the walls of the edible casing of the composite frozen product. While some of the casing material 6 is compressed to form the casing walls 7 the excess casing material 6 is diverted into passage 3 of the forming element. This passage 3 is a critical component of the forming element. In the absence of the passage the excess coating material would very rapidly form a compacted mass within the container. This would resist the movement of the forming element and would ultimately impede the ability of the forming element to pass through the coating material thereby to form the walls of the casing.
This excess material in passage 3 is then extracted using the means for removing excess coating material. As described above, any suitable removal means may be employed such as a suction tube or the like. In a preferred embodiment the removal means is a screw extruder consisting of a central rotatable shaft around which helical flights are positioned. Such an extruder 8 is shown schematically in Figure 5 which shows that as the means for removing excess coating material 8 rotate within the passage 3 of the forming element 2 the excess coating material 6 passes along the flights of the extruder and are ejected from the container 1 as indicated by the arrow in the figure. This material can then be re-circulated and used in the production of subsequent products.

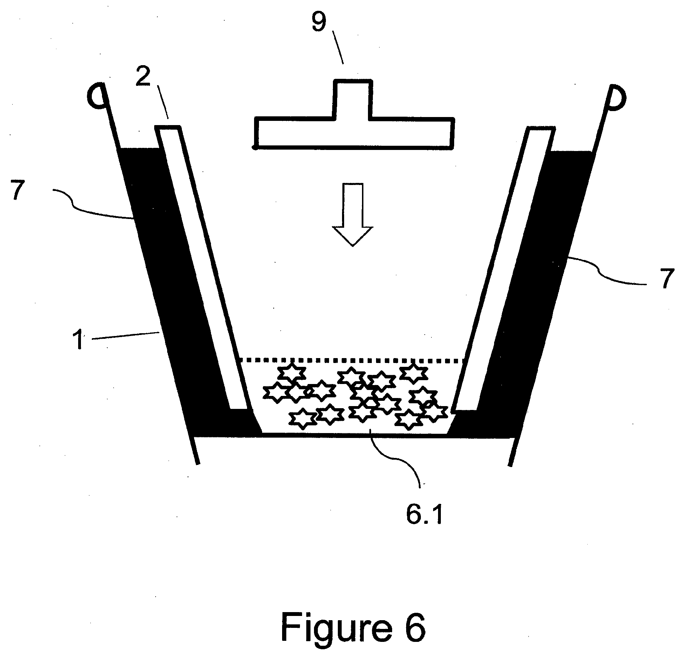

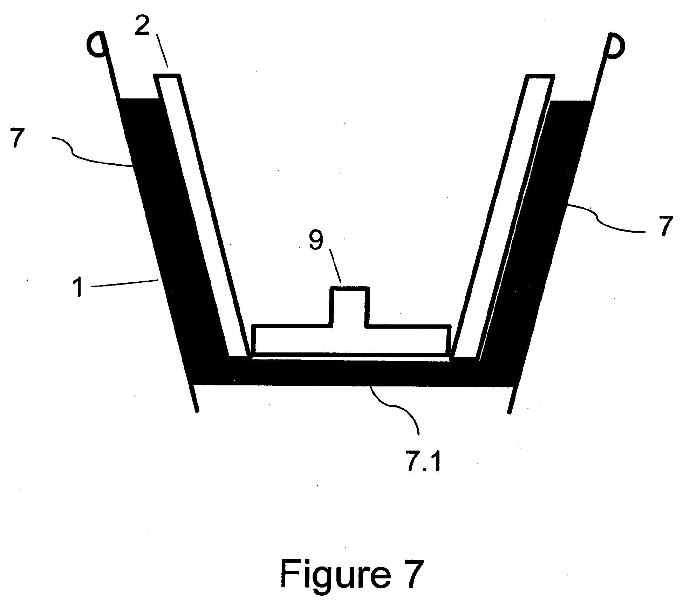

As shown in Figure 6, an amount of casing material 6.1 is preferably left in the base of the container 1. This can then be compressed as shown in figure 7 by using a tamping element 9 to compact the base of the casing 7.1 to complete the casing within the container. This tamping step can also be done once the forming element has been removed. This step can also be performed prior to filling the container 1 with casing material 6 in which case a small amount of casing material is dosed into the container which is tamped down to form the compacted base prior to introducing the rest of the coating material and compressing with the forming element.

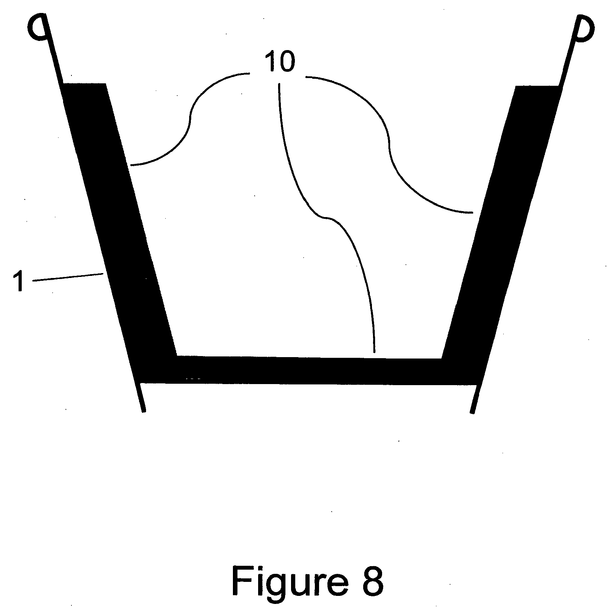

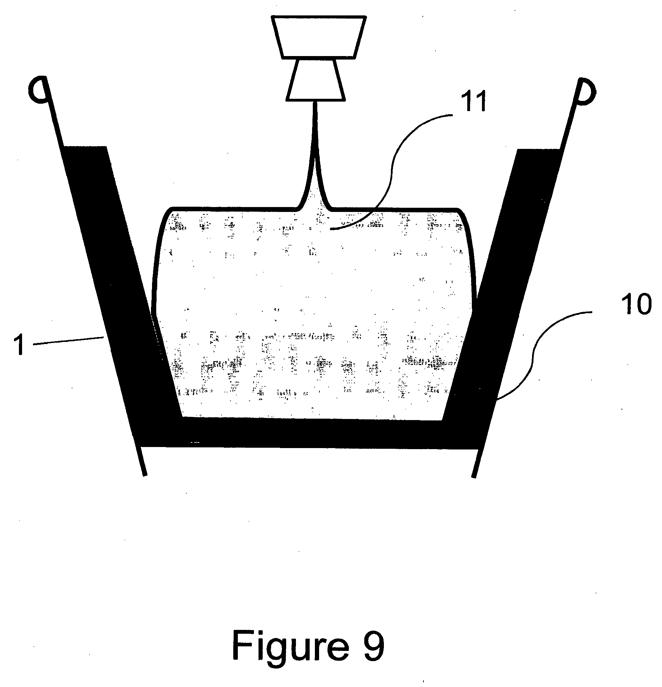

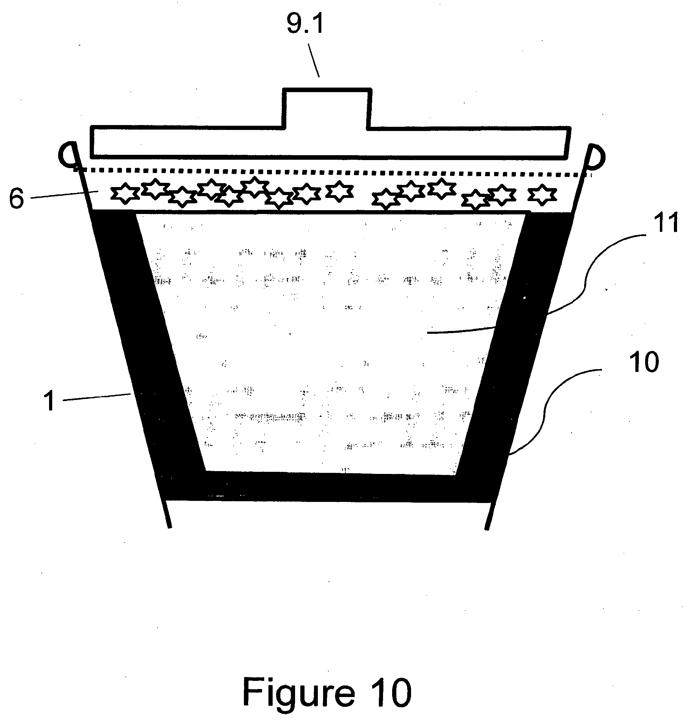

The forming element is then removed to leave a complete casing 10 that has been formed within the interior of the container as shown in figure 8. The casing is then filled with a frozen confection 11 as shown in figure 9 to form the desired composite frozen product. The casing can then additionally added to as shown in figure 10 by optionally topping with further casing material 6 which can then be tamped down with a second tamping element 9.1 to create a casing that completely encloses the frozen confection.

The present invention will now be further described with reference to the following non-limiting examples.

### EXAMPLES

### Biscuit particles

Digestive biscuits were ground and the resulting particles were separated into two size grades, the first having an average particle diameter of 250um, the second having an average particle diameter of 4mm. These biscuits were then mixed with coconut oil (which was used as a binder). The resulting samples contained 15wt%, 25wt% and 35wt% of binder. A further sample contained no binder.

All samples were processed as follows: Containers were filled with samples of the biscuit particles and a forming element (as described above) was then introduced into the containers to compress the biscuit particles against the internal surface of the container. Excess biscuit particles were removed from the passage of the forming element, after which the forming element was removed. The resulting casings formed from the biscuit particles were then assessed, in particular the success of the apparatus and process in forming the walls of the casing were assessed, as was the stability of the walls. The stability was tested by deforming the container by squeezing by hand and the resilience of the walls to this abuse was determined.

It was found that it was possible to form stable casing from all the samples that employed biscuit particle with an average diameter of 250um, even the sample that had no binder. In contrast, the biscuit particle samples with an average diameter of 4mm did not form stable walls.

It can therefore be seen that the apparatus and process of the invention is capable of forming a casing for a composite frozen product where the particles are have an average diameter of less than 4mm.

### Sponge particles

Pieces of sponge cake were broken up and the resulting particles were separated into two size grades, the first having an average particle diameter of about 3mm, the second having an average particle diameter of from 8-9mm. These particles were then mixed with coconut oil (which was used as a binder). The resulting samples contained 15wt%, 25wt% and 35wt% of binder. A further sample contained no binder.

All samples were processed as described above. The resulting casings formed from the sponge particles was then assessed as described above.

It was found that it was possible to form stable casing from all the samples that employed sponge particles with an average diameter of about 3mm. In contrast, the sponge particle samples with an average diameter of from 8-9mm did not form stable walls.

These results further confirm the finding that the apparatus and process of the invention is capable of forming a casing for a composite frozen product where the particles are have an average diameter of less than 4mm.

It should be understood that the specific forms of the invention herein illustrated and described are intended to be representative only, as certain changes may be made therein without departing from the clear teachings of the disclosure.

## Claims

1. An apparatus for the production of a composite frozen product in a container, the product being comprised of a frozen confection within an edible casing, wherein the apparatus comprises:
o a forming element having an external surface corresponding to the internal shape of the container, the forming element being further **characterised by** a passage running through the forming element from an upper opening to a lower opening
the apparatus further comprising
o means for removing material from the passage of the forming element.

2. An apparatus according to claim 1 wherein the means for removing material comprise a suction device.

3. An apparatus according to claim 1 wherein the means for removing material comprise a screw extruder.

4. A process for the production of a composite frozen product in a container, the product being comprised of a frozen confection within an edible casing, the process comprising the steps of:
a) at least partially filling the container with particles of a casing material having an average diameter of at most 3mm,
b) inserting a forming element into the container, the forming element having an external surface corresponding to the internal shape of the container, and being further **characterised by** a passage running through the forming element from an upper opening to a lower opening
c) removing excess casing material from the passage of the forming element
d) removing the forming element and then
e) at least partially filling the container with a frozen confection.

5. A process according to claim 4 wherein the container is a tub.

6. A process according to claim 4 wherein the container is a sleeve for a cone.

7. A process according to any of claims 4 to 6 wherein the edible casing comprises at least 50 wt%, preferably at least 70wt%, more preferably at least 85 wt%, more preferably still at least 90wt%, yet more preferably still 95wt%, most preferably 97.5wt% of particles of casing material.

8. A process according to any of claims 4 to 7 wherein the particles of casing material have an average diameter of from 0.001 to 2.5 mm.

## Patentansprüche

1. Vorrichtung für die Herstellung eines zusammengesetzten gefrorenen Produkts in einem Behälter, wobei das Produkt aus einem gefrorenen Konfekt mit einem essbaren Überzug besteht, wobei die Vorrichtung Folgendes umfasst:
• ein Formgebungselement, das eine äußere Oberfläche aufweist, die der inneren Form des Behälters entspricht, wobei das Formgebungselement ferner **gekennzeichnet ist durch** einen Durchgang, der **durch** das Formgebungselement von einer oberen Öffnung zu einer unteren Öffnung verläuft,
wobei die Vorrichtung ferner Folgendes umfasst:
• Mittel zum Entfernen von Material aus dem Durchgang des Formgebungselements.

2. Vorrichtung nach Anspruch 1, wobei die Mittel zum Entfernen von Material eine Saugvorrichtung umfassen.

3. Vorrichtung nach Anspruch 1, wobei die Mittel zum Entfernen von Material einen Schraubenextruder umfassen.

4. Verfahren für die Herstellung eines zusammengesetzten gefrorenen Produkts in einem Behälter, wobei das Produkt aus einem gefrorenen Konfekt mit einem essbaren Überzug besteht, wobei das Verfahren die folgenden Schritte umfasst:
a) wenigstens teilweises Füllen des Behälters mit Partikeln eines Überzugmaterials mit einem mittleren Durchmesser von höchstens 3 mm,
b) Einsetzen eines Formgebungselements in den Behälter, wobei das Formgebungselement eine äußere Oberfläche aufweist, die der inneren Form des Behälters entspricht, und das ferner **gekennzeichnet ist durch** einen Durchgang, der **durch** das Formgebungselement von einer oberen Öffnung zu einer unteren Öffnung verläuft,
c) Entfernen von überschüssigem Gehäusematerial aus dem Durchgang des Formgebungselements
d) Entfernen des Formgebungselements und daraufhin
e) wenigstens teilweises Füllen des Behälters mit einem gefrorenen Konfekt.

5. Verfahren nach Anspruch 4, wobei der Behälter eine Wanne ist.

6. Verfahren nach Anspruch 4, wobei der Behälter eine Hülle für eine Eistüte ist.

7. Verfahren nach einem der Ansprüche 4 bis 6, wobei der essbare Überzug wenigstens 50 Gew.-%, vorzugsweise wenigstens 70 Gew.-%, stärker bevorzugt wenigstens 85 Gew.-%, noch stärker bevorzugt wenigstens 90 Gew.-%, nochmals stärker bevorzugt 95 Gew.-%, am stärksten bevorzug 97,5 Gew.-% Partikel des Überzugmaterials umfasst.

8. Verfahren nach einem der Ansprüche 4 bis 7, wobei die Partikel des Überzugmaterials einen mittleren Durchmesser zwischen 0,001 und 2,5 mm haben.

## Revendications

1. Appareil pour la production d'un produit congelé composite dans un récipient, le produit étant constitué d'une confiserie congelée à l'intérieur d'une enveloppe comestible, dans lequel l'appareil comprend :
∘ un élément de formation présentant une surface externe correspondant à la forme interne du récipient, l'élément de formation étant de plus **caractérisé par** un passage passant à travers l'élément de formation à partir d'une ouverture supérieure vers une ouverture inférieure
l'appareil comprenant de plus
∘ un moyen de prélèvement de matériau à partir du passage de l'élément de formation.

2. Appareil selon la revendication 1, dans lequel le moyen de prélèvement de matériau comprend un dispositif d'aspiration.

3. Appareil selon la revendication 1, dans lequel le moyen de prélèvement de matériau comprend une extrudeuse à vis.

4. Procédé pour la production d'un produit congelé composite dans un récipient, le produit étant constitué d'une confiserie congelée à l'intérieur d'une enveloppe comestible, le procédé comprenant les étapes de :
a) remplissage au moins partiel du récipient avec des particules d'un matériau d'enveloppe présentant un diamètre moyen d'au plus 3 mm,
b) insertion d'un élément de formation dans le récipient, l'élément de formation présentant une surface externe correspondant à la forme interne du récipient, et étant de plus **caractérisé par** un passage passant à travers l'élément de formation à partir d'une ouverture supérieure vers une ouverture inférieure
c) prélèvement du matériau d'enveloppe en excès à partir du passage de l'élément de formation
d) prélèvement de l'élément de formation et ensuite
e) remplissage au moins partiel du récipient avec une confiserie congelée.

5. Procédé selon la revendication 4, dans lequel le récipient est un tube.

6. Procédé selon la revendication 4, dans lequel le récipient est un manchon pour un cône.

7. Procédé selon l'une quelconque des revendications 4 à 6, dans lequel l'enveloppe comestible comprend au moins 50 % en masse, de préférence au moins 70 % en masse, encore mieux au moins 85 % en masse, bien mieux encore au moins 90 % en masse, particulièrement de préférence 95 % en masse, particulièrement encore mieux 97,5 % en masse de particules de matériau d'enveloppe.

8. Procédé selon l'une quelconque des revendications 4 à 7, dans lequel les particules de matériau d'enveloppe présentent un diamètre moyen de 0,001 à 2,5 mm.
